# EUROPÄISCHE PATENTSCHRIFT

(11) **EP 1 044 578 B1**
(45) Veröffentlichungstag und Bekanntmachung des Hinweises auf die Patenterteilung: **22.11.2006**
(21) Anmeldenummer: 98966527.8
(22) Anmeldetag: 10.12.1998
(51) Int. Cl.: H04Q 7/32, H04M 1/72

(54) **VERFAHREN ZUM BETRIEB EINES TELEKOMMUNIKATIONSENDGERÄTES UND TELEKOMMUNIKATIONSENDGERÄT**
PROCESS FOR OPERATING A TELECOMMUNICATION TERMINAL AND TELECOMMUNICATION TERMINAL
PROCEDE PERMETTANT DE FAIRE FONCTIONNER UN TERMINAL DE TELECOMMUNICATIONS ET TERMINAL DE TELECOMMUNICATIONS

(30) Priorität: 11.12.1997 DE 19755049
(43) Veröffentlichungstag der Anmeldung: 18.10.2000
(73) Patentinhaber: ROBERT BOSCH GMBH, 70442 Stuttgart (DE)
(72) Erfinder: MOELLER, Stephan, D-30519 Hannover (DE); MURGAS, Hans, D-61462 Königstein (DE)
(86) Internationale Anmeldenummer: PCT/DE1998/003634
(87) Internationale Veröffentlichungsnummer: WO 1999/030422

(56) Entgegenhaltungen:
- WO-A-92/10046
- DE-A- 3 528 886

## Beschreibung

### Stand der Technik

Die Erfindung geht von einem Verfahren zum Betrieb eines Telekommunikationsendgerätes nach der Gattung des unabhängigen Anspruchs 1, von einem Telekommunikationsendgerät nach der Gattung des unabhängigen Anspruchs 6 und von einem Funkmodul nach der Gattung des unabhängigen Anspruchs 10 aus.

Aus der noch nicht vorveröffentlichten deutschen Patentanmeldung mit dem Aktenzeichen 197 05 447 ist bereits bekannt, daß ein Funkgerät mit verschiedenen Leistungsstufen betreibbar und somit flexibel einsetzbar ist. So kann ein preiswertes Funkgerät einer niedrigeren Leistungsstufe mittels einer anschließbaren HF-Verstärkerschaltung auf einfache Weise für den Betrieb in einer höheren Leistungsstufe ausgerüstet werden. Die Reichweite eines Funkgerätes einer ersten vorgegebenen Leistungsstufe kann mit einfachen Mitteln durch Anschluß einer HF-Verstärkerschaltung erhöht werden.

In der DE 35 28 886 wird ein Mobilfunkgerät dargestellt, welches in einer ersten Betriebsart, in der es sich nach dem Einschalten befindet, direkt mit einer Basisstation des Funknetzes in Kontakt tritt. Reicht die Sendeleistung des Mobilfunkgeräts dafür nicht aus, wird eine zweite Betriebsart eingeschaltet, in dem das Funkgerät mit einer fahrzeuggebundenen Gegenstation Kontakt aufnimmt, die dann die Verbindung zur Basisstation des Funknetzes herstellt.

Die WO 92/10046 zeigt ein Telefon mit einer Infrarotschnittstelle für den Einsatz in Kraftfahrzeugen.

Vorteile der Erfindung

Das erfindungsgemäße Verfahren mit den Merkmalen des unabhängigen Anspruchs 1, das erfindungsgemäße Telekommunikationsendgerät mit den Merkmalen des unabhängigen Anspruchs 5 haben demgegenüber den Vorteil, daß bei einem Verbindungswunsch vom Telekommunikationsendgerät geprüft wird, ob eine drahtlose Verbindung zum Funkmodul aufgebaut werden kann und daß für den Fall, daß eine drahtlose Verbindung zum Funkmodul aufgebaut werden kann, zwischen dem Telekommunikationsendgerät und dem Funkmodul Signale drahtlos übertragen werden und vom Funkmodul Signale mit einer vorgegebenen Leistung abgestrahlt werden, die von empfangenen Signalen des Telekommunikationsendgerätes abgeleitet sind. Auf diese Weise kann die störende Kabelverbindung zwischen dem Telekommunikationsendgerät und dem Funkmodul vermieden werden. Bei einer Anordnung des Funkmoduls in einem Kraftfahrzeug unter Verwendung des Telekommunikationsendgerätes im Kraftfahrzeug wird so die Aufmerksamkeit des Fahrers nicht durch eine mögliche Kabelverhakung beeinträchtigt und die Verkehrssicherheit dadurch erhöht. Das Telekommunikationsendgerät kann außerdem problemlos ohne Rücksicht auf Kabellängen an Mitfahrer weitergereicht werden.

Ein weiterer Vorteil besteht darin, daß als Telekommunikationsendgerät auch ein Gerät verwendet werden kann, das keine Funkvorrichtung oder nur eine Funkvorrichtung mit vergleichsweise geringer Sendeleistung aufweist und die für eine Funkverbindung erforderliche Abstrahlleistung vom Funkmodul realisiert wird. Auf diese Weise lassen sich Kosten beim Telekommunikationsendgerät einsparen, wobei mehrere Telekommunikationsendgeräte auch über ein einziges Funkmodul zum Abstrahlen von Funksignalen betrieben werden können, wodurch noch mehr Kosten eingespart werden, da die entsprechende Funktionalität zur Aufbringung der erforderlichen Abstrahlleistung nur einmal, nämlich im Funkmodul vorgesehen sein muß.

Wird eine vergleichsweise hohe vorgegebene Leistung zur Abstrahlung von Funksignalen vom Funkmodul vorgesehen, so ergibt sich eine hohe Übertragungssicherheit für die Übertragung dieser Funksignale, eine hohe Reichweite der Funksignale, eine hohe Sprachqualität bei der Übertragung von Sprachdaten mittels den Funksignalen, eine erhöhte Verbindungssicherheit für in Randbereichen von durch entsprechende Basisstationen aufgespannten Funkzellen angeordnete Funkmodule und bei Anwendung im Kraftfahrzeug auch eine erhöhte Verbindungssicherheit bei schneller Fahrt. Dadurch lassen sich auch Daten- und Faxübertragungen bei an das Funkmodul oder das Telekommunikationsendgerät angeschlossener Rechnereinheit bzw. angeschlossenem Faxgerät unterbrechungsfrei mittels den Funksignalen übertragen.

Ein weiterer Vorteil besteht darin, daß über das Funkmodul von verschiedenen Telekommunikationsendgeräten Funkverbindungen aufgebaut und durchgeführt werden können, da das Funkmodul unabhängig von den verwendeten Telekommunikationsendgeräten ist und daher von wechselnden Nutzern betrieben werden kann. Aufgrund dieser Unabhängigkeit kann umgekehrt ein Telekommunikationsendgerät über beliebige Funkmodule betrieben werden.

Durch die in den Unteransprüchen aufgeführten Maßnahmen sind vorteilhafte Weiterbildungen und Verbesserungen des im unabhängigen Anspruch 1 angegebenen Verfahrens und des im unabhängigen Anspruch 5 angegebenen Telekommunikationsendgerätes möglich.

Besonders vorteilhaft ist es, daß für den Fall, daß keine drahtlose Verbindung zum Funkmodul aufgebaut werden kann, Signale vom Telekommunikationsendgerät mit einer weiteren vorgegebenen Leistung abgestrahlt werden. Auf diese Weise läßt sich das Telekommunikationsendgerät auch unabhängig vom Funkmodul betreiben, so daß das Telekommunikationsendgerät bei einem beispielsweise ins Kraftfahrzeug eingebauten Funkmodul auch außerhalb des Kraftfahrzeuges bzw. außerhalb der Reichweite des Funkmoduls betrieben werden kann und der Benutzer für Funkanwendungen innerhalb und außerhalb des Kraftfahrzeuges nur ein einziges Telekommunikationsendgerät benötigt. Dies spart Kosten und erleichtert dem Benutzer auch die Bedienung, da er sich nur an die Bedienerführung des einzigen Telekommunikationsendgerätes gewöhnen muß und nur eine Zugangsberechtigungskarte benötigt und ihm ein einheitlicher Telefonbuchspeicher zur Verfügung steht.

Die Bedienung wird auch dadurch für den Benutzer vereinfacht, daß die drahtlose Verbindung zum Funkmodul automatisch auf die Abstrahlung der Signale vom Telekommunikationsendgerät mit der weiteren vorgegebenen Leistung umgeschaltet wird.

Ein weiterer Vorteil besteht darin, daß zwischen dem Telekommunikationsendgerät und dem Funkmodul optische Signale, vorzugsweise in einem Infrarotfrequenzbereich, übertragen werden. Auf diese Weise ergibt sich für die drahtlose Verbindung zwischen dem Telekommunikationsendgerät und dem Funkmodul für den Benutzer keine Strahlenbelastung. Außerdem wirkt sich ein optischer Datenaustausch zwischen dem Telekommunikationsendgerät und einem in einem Kraftfahrzeug angeordneten Funkmodul nicht auf die Kraftfahrzeugelektronik aus, so daß diese durch den Datenaustausch zwischen dem Telekommunikationsendgerät und dem Funkmodul nicht beeinträchtigt wird. Im Kraftfahrzeug kann also zwischen dem Telekommunikationsendgerät und dem Funkmodul mittels optischer Signale ein sicherer Datenaustausch ohne Auswirkungen auf die Kraftfahrzeugelektronik durchgeführt werden. Eine entsprechende, in das Telekommunikationsendgerät zu integrierende optische Schnittstelle verursacht nur ein unwesentliches zusätzliches Gewicht und kann kostengünstig und platzsparend realisiert werden.

Ein weiterer Vorteil besteht darin, daß zwischen dem Telekommunikationsendgerät und dem Funkmodul Funksignale mit begrenzter Reichweite, vorzugsweise nach dem DECT-Standard (Digital Enhanced Cordless Telecommunications), übertragen werden. Auf diese Weise kann die drahtlose Übertragung zwischen dem Telekommunikationsendgerät und dem Funkmodul nicht durch optische Hindernisse unterbrochen werden.

Ein weiterer Vorteil besteht darin, daß während einer Unterbrechung einer drahtlosen Übertragung zwischen dem Telekommunikationsendgerät und dem Funkmodul vom Telekommunikationsendgerät Signale mit der weiteren vorgegebenen Leistung abgestrahlt werden. Auf diese Weise wird sichergestellt, daß eine bestehende Verbindung zwischen dem Telekommunikationsendgerät und einem weiteren Teilnehmer eines Funknetzes nicht unterbrochen wird, wenn die drahtlose Übertragung zwischen dem Telekommunikationsendgerät und dem Funkmodul abbricht, beispielsweise durch Hindernisse in einem optischen Übertragungsweg. Die Verbindungssicherheit wird somit weiter erhöht.

### Zeichnung

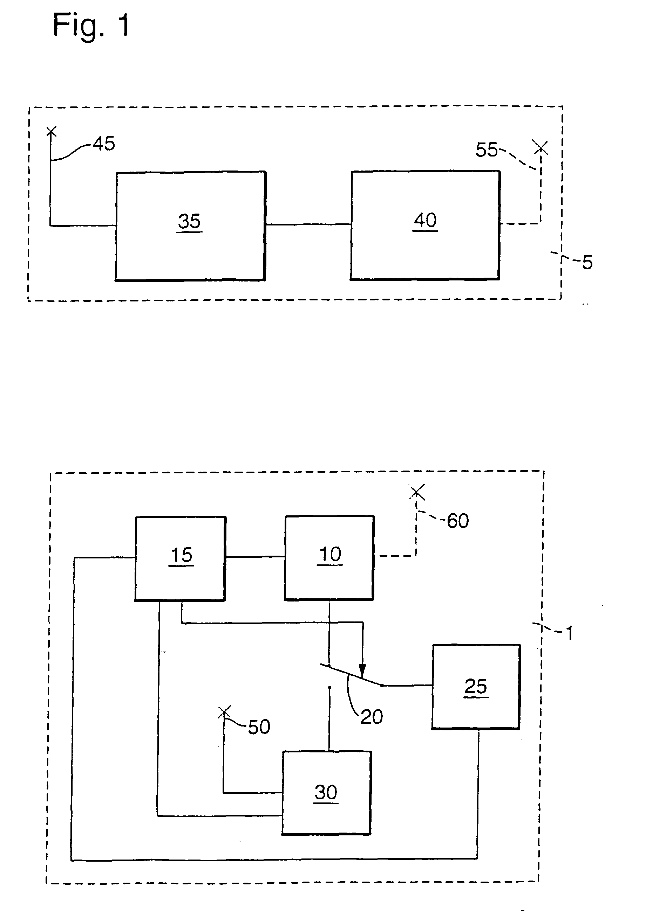

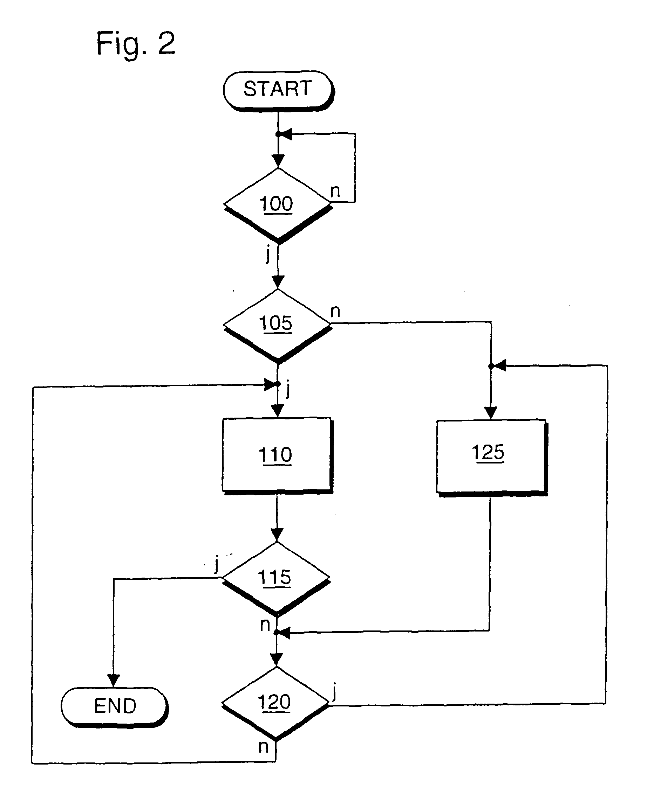

Ein Ausführungsbeispiel der Erfindung ist in der Zeichnung dargestellt und in der nachfolgenden Beschreibung näher erläutert. Es zeigen Figur 1 ein Blockschaltbild eines Funkmoduls und eines Funkgerätes und Figur 2 einen Ablaufplan für den Ablauf des erfindungsgemäßen Verfahrens.

### Beschreibung des Ausführungsbeispieles

In Figur 1 kennzeichnet 5 ein Funkmodul, beispielsweise ein Funkmodul nach dem GSM-Standard (Global System for Mobile Communications). Das Funkmodul 5 umfaßt eine Funksendeeinheit 35 und eine an die Funksendeeinheit 35 angeschlossene erste Schnittstelle 40. An die Funksendeeinheit 35 ist eine erste Sende-/Empfangsantenne 45 angeschlossen. Die Funksendeeinheit 35 kann auch eine Empfangseinheit umfassen, die für die Beschreibung dieses Ausführungsbeispiels jedoch unerheblich ist. Die erste Schnittstelle 40 ist eine Schnittstelle für drahtlosen Datenaustausch und kann beispielsweise als optische Schnittstelle oder als Funkschnittstelle für Funkübertragungen begrenzter Reichweite ausgebildet sein. Bei Ausbildung als optische Schnittstelle kann es sich beispielsweise um eine Infrarotschnittstelle gemäß dem IrDA-Standard (Infrared Data Association) handeln. Bei Ausbildung als Funkschnittstelle für Funkübertragungen mit begrenzter Reichweite kann es sich beispielsweise um eine Funkschnittstelle nach dem DECT-Standard (Digital Enhanced Cordless Telecommunications) handeln. Bei Ausbildung der ersten Schnittstelle 40 als Funkschnittstelle ist an die erste Schnittstelle 40 eine dritte Sende-/Empfangsantenne 55 angeschlossen, die in Figur 1 gestrichelt dargestellt ist. Über die erste Sende-/Empfangsantenne 45 können Funksignale von der Funksendeeinheit 35 bei einer ersten vorgegebenen Leistung von beispielsweise 8W abgestrahlt werden.

Das Funkmodul 5 kann beispielsweise mit einem Autoradio verbunden oder in ein solches integriert sein. Als erste Sende-/Empfangsantenne 45 kann dann eine Kraftfahrzeugantenne verwendet werden.

In Figur 1 kennzeichnet 1 ein als Funkgerät, beispielsweise als Mobiltelefon nach dem GSM-Standard ausgebildetes Telekommunikationsendgerät, das eine Sendeeinheit 25 umfaßt, die über einen Umschalter 20 mit einer zweiten Schnittstelle 10 verbindbar ist. Das Funkgerät 1 kann auch als Mobilfunkgerät, Handfunkgerät, Betriebsfunkgerät oder dergleichen ausgebildet sein. Über den Umschalter 20 ist die Sendeeinheit 25 außerdem mit einer Funkeinheit 30 verbindbar, an die eine zweite Sende-/Empfangsantenne 50 angeschlossen ist. Das Funkgerät 1 umfaßt weiterhin eine Prüfvorrichtung 15, an die die Sendeeinheit 25, die Funkeinheit 30 und die zweite Schnittstelle 10 angeschlossen sind und die den Umschalter 20 ansteuert. Die zweite Schnittstelle 10 kann als optische Schnittstelle, beispielsweise als Infrarotschnittstelle nach dem IrDA-Standard ausgebildet sein. Die zweite Schnittstelle 10 kann jedoch auch als Funkschnittstelle für Funkübertragungen mit begrenzter Reichweite beispielsweise nach dem DECT-Standard ausgebildet sein. Bei Ausbildung der zweiten Schnittstelle 10 als Funkschnittstelle ist an die zweite Schnittstelle 10 eine vierte Sende-/Empfangsantenne 60 angeschlossen und in Figur 1 gestrichelt dargestellt.

Für das Zusammenwirken des Funkgerätes 1 mit dem Funkmodul 5 ist es erforderlich, daß die erste Schnittstelle 40 und die zweite Schnittstelle 10 einen drahtlosen Datenaustausch gleichartiger Daten ermöglichen, das heißt, daß beide Schnittstellen entweder als optische Schnittstellen oder als Funkschnittstellen ausgebildet sind.

In Figur 2 ist ein Ablaufplan für die Funktionsweise des erfindungsgemäßen Verfahrens dargestellt. Bei einem Programmpunkt 100 prüft die Prüfvorrichtung 15, ob ein Verbindungswunsch vorliegt. Ist dies der Fall, so wird zu einem Programmpunkt 105 verzweigt, andernfalls wird zu Programmpunkt 100 zurückverzweigt. Ein Verbindungswunsch kann dabei vom Benutzer des Funkgerätes 1 durch Eingabe einer Rufnummer an einer in Figur 1 nicht dargestellten und ebenfalls mit der Prüfvorrichtung 15 verbundenen Eingabeeinheit erfolgen. Die Prüfvorrichtung 15 veranlaßt daraufhin den Umschalter 20 zur Verbindung der Sendeeinheit 25 mit der zweiten Schnittstelle 10, um entsprechende Wahlinformationen an das Funkmodul 5 drahtlos zu übertragen, und anschließend die Sendeeinheit 25 zur Übertragung der Wahlinformation. Die Sendeeinheit 25 kann zusätzlich mit einer Empfangseinheit kombiniert sein. Je nach Schalterstellung des Umschalters 20 kann in der um die Empfangseinheit erweiterten Sendeeinheit 25 über die zweite Schnittstelle 10 oder die Funkeinheit 30 ein Verbindungswunsch eines weiteren Teilnehmers eines Funknetzes eingehen. Das Funkmodul 5 und das Funkgerät 1 können sich dabei in einer von einer in Figur 1 nicht dargestellten Basisstation aufgespannten Funkzelle dieses Funknetzes befinden, das gemäß dem GSM-Standard ausgebildet sein kann. Die den Verbindungswunsch des weiteren Teilnehmers signalisierenden Funkdaten können dabei sowohl von der ersten Sende-/Empfangsantenne 45 als auch von der zweiten Sende-/Empfangsantenne 50 empfangen werden. Von der Funkeinheit 30 empfangene, einen Verbindungswunsch signalisierende Daten können von der Prüfvorrichtung 15 detektiert werden. Von der Funksendeeinheit 35 des Funkmoduls 5 empfangene, einen Verbindungswunsch signalisierende Daten können über die erste Schnittstelle 40 an die zweite Schnittstelle 10 drahtlos übertragen und ebenfalls von der Prüfvorrichtung 15 detektiert werden.

Bei Programmpunkt 105 prüft die Prüfvorrichtung 15, ob eine drahtlose Verbindung zwischen der ersten Schnittstelle 40 und der zweiten Schnittstelle 10 möglich ist. Ist dies der Fall, so wird zu einem Programmpunkt 110 verzweigt, andernfalls wird zu einem Programmpunkt 125 verzweigt. Wurden die den Verbindungswunsch signalisierenden Daten von der zweiten Schnittstelle 10 empfangen, so kann eine Prüfung auf drahtlose Verbindung zwischen den beiden Schnittstellen 10, 40 entfallen. Ging der Verbindungswunsch vom Benutzer des Funkgerätes 1 aus, so prüft die Prüfvorrichtung 15, ob innerhalb einer vorgegebenen Zeit vom Funkmodul 5 ein Quittierungssignal als Antwort auf die von der zweiten Schnittstelle 10 abgesendeten Wahlinformationen in der zweiten Schnittstelle 10 empfangen wurde. Ist dies der Fall, so ist eine drahtlose Verbindung zwischen den beiden Schnittstellen 10, 40 möglich. Wurden die den Verbindungswunsch signalisierenden Daten von der Funkeinheit 30 empfangen, so veranlaßt die Prüfvorrichtung 15 zunächst den Umschalter 20 zur Verbindung der zweiten Schnittstelle 10 mit der Sendeeinheit 25, falls diese Verbindung nicht bereits besteht, und anschließend die Sendeeinheit 25 zur Absendung eines Aufforderungssignals über die zweite Schnittstelle 10 an das Funkmodul 5. Anschließend wird in der beschriebenen Weise von der Prüfvorrichtung 15 der Empfang eines Quittierungssignals als Antwort auf das Aufforderungssignal innerhalb der vorgegebenen Zeit geprüft. Bei Programmpunkt 110 veranlaßt die Prüfvorrichtung 15 den Umschalter 20 zur Verbindung der zweiten Schnittstelle 10 mit der Sendeeinheit 25, falls diese Verbindung nicht bereits besteht. Von der Sendeeinheit 25 werden dann Daten, beispielsweise Gesprächsdaten an die zweite Schnittstelle 10 zur Absendung an das Funkmodul 5 gegebenenfalls nach einer Signalanpassung weitergeleitet. Die Funksendeeinheit 35 leitet aus den von der ersten Schnittstelle 40 empfangenen Datensignalen des Funkgerätes 1 Funksignale ab und strahlt sie mit der ersten vorgegebenen Abstrahlleistung von der ersten Sende-/Empfangsantenne 45 an den Verbindungsteilnehmer über das Funknetz ab. Vom Verbindungsteilnehmer können Daten sowohl über die erste Sende-/Empfangsantenne 45 des Funkmoduls 5 als auch über die zweite Sende-/Empfangsantenne 50 des Funkgerätes 1 empfangen werden. Von den vom Funkmodul 5 empfangenen Signalen des Verbindungsteilnehmers abgeleitete Signale können von der ersten Schnittstelle 40 an die zweite Schnittstelle 10 drahtlos übertragen werden und an die um die Empfangseinheit erweiterte Sendeeinheit 25 gegebenenfalls nach einer Signalanpassung weitergeleitet werden. Zusätzlich oder alternativ zur in die Sendeeinheit 25 integrierten Empfangseinheit kann an die Funkeinheit 30 eine separate Empfangseinheit angeschlossen sein, an die unabhängig von der Schalterstellung des Umschalters 20 von der zweiten Sende-/Empfangsantenne 50 empfangene Signale des Verbindungsteilnehmers weitergeleitet werden, so daß bei Empfang von Funksignalen durch die zweite Sende-/Empfangsantenne 50 der Umschalter 20 nicht zur Verbindung der Funkeinheit 30 mit der um die Empfangseinheit erweiterten Sendeeinheit 25 umgeschaltet werden muß.

Bei einem Programmpunkt 115 prüft die Prüfvorrichtung 15, ob die Verbindung beendet ist. Ist dies der Fall, so wird der Programmteil verlassen, andernfalls wird zu einem Programmpunkt 120 verzweigt. Das Verbindungsende kann durch den Benutzer des Funkgerätes 1 eingeleitet werden, indem er beispielsweise eine entsprechend vorgesehene Hörertaste an der in Figur 1 nicht dargestellten Eingabeeinheit betätigt, wobei diese Betätigung von der Prüfvorrichtung 15 detektiert wird. Dazu kann die Eingabeeinheit wie beschrieben mit der Prüfvorrichtung 15 verbunden sein. Das Verbindungsende kann jedoch auch vom Verbindungsteilnehmer durch ein entsprechend ausgesendetes Verbindungsendesignal eingeleitet werden. Das Verbindungsendesignal kann sowohl von der ersten Sende-/Empfangsantenne 45 als auch von der zweiten Sende/Empfangsantenne 50 empfangen werden. Bei Empfang des Verbindungsendesignals durch die erste Sende-/Empfangsantenne 45 des Funkmoduls 5 wird in der ersten Schnittstelle 40 von dem Verbindungsendesignal ein entsprechendes Datensignal abgeleitet und an die zweite Schnittstelle 10 drahtlos übertragen. Dieses Datensignal kann von der Prüfvorrichtung 15 detektiert werden. Die Prüfvorrichtung 15 kann jedoch auch ein von der Funkeinheit 30 empfangenes Verbindungsendesignal detektieren.

Bei Programmpunkt 120 prüft die Prüfvorrichtung 15, ob der drahtlose Datenaustausch zwischen der ersten Schnittstelle 40 und der zweiten Schnittstelle 10 unterbrochen ist. Ist dies der Fall, so wird zu Programmpunkt 125 verzweigt, andernfalls wird zu Programmpunkt 110 zurückverzweigt. Für diese Prüfung des drahtlosen Datenaustausches zwischen den beiden Schnittstellen 10, 40 kann die Prüfvorrichtung 15 die Sendeeinheit 25 zur Aussendung eines Abfragesignals über die zweite Schnittstelle 10 an das Funkmodul 5 veranlassen. Zuvor veranlaßt die Prüfvorrichtung 15 den Umschalter 20 zur Verbindung der Sendeeinheit 25 mit der zweiten Schnittstelle 10, falls diese Verbindung nicht bereits besteht. Empfängt die zweite Schnittstelle 10 nicht innerhalb einer zweiten vorgegebenen Zeit nach Absenden des Abfragesignals ein entsprechendes Quittierungssignal von dem Funkmodul 5 als Antwort auf das Abfragesignal, so stellt die Prüfvorrichtung 15 fest, daß der drahtlose Datenaustausch unterbrochen ist.

Bei Programmpunkt 125 veranlaßt die Prüfvorrichtung 15 den Umschalter 20 zur Verbindung der Funkeinheit 30 mit der Sendeeinheit 25. Das Absenden von Funksignalen an den Verbindungsteilnehmer erfolgt dann von der zweiten Sende-/Empfangsantenne 50 des Funkgerätes 1 mit einer zweiten vorgegebenen Leistung von beispielsweise 2W in dem GSM-Funknetz gemäß dieses Ausführungsbeispiels. Zwischen den beiden Schnittstellen 10, 40 erfolgt dann kein Datenaustausch. Der Empfang von Signalen des Verbindungsteilnehmers im Funkgerät 1 ist bei diesem Programmpunkt nur direkt über die zweite Sende-/Empfangsantenne 50 und die Funkeinheit 30 möglich, nicht jedoch über die zweite Schnittstelle 10, da der Umschalter 20 die Funkeinheit 30 mit der Sendeeinheit 25 verbindet und zwischen den beiden Schnittstellen 10, 40 sowieso gerade kein drahtloser Datenaustausch möglich ist. Von Programmpunkt 125 wird nach Ablauf einer dritten vorgegebenen Zeit zu Programmpunkt 120 verzweigt, um eine erneute Überprüfung eines drahtlosen Datenaustausches über die Schnittstellen 10, 40 zu ermöglichen.

Es kann auch vorgesehen sein, die Funkeinheit 30 mit der zweiten Sende-/Empfangsantenne 50 im Funkgerät 1 nicht vorzusehen und die Sendeeinheit 25 fest mit der zweiten Schnittstelle 10 zu verbinden. In diesem Fall wäre auch die Prüfvorrichtung 15 nicht erforderlich. Eine bidirektionale Verbindung zwischen dem Funkgerät 1 und einem Verbindungsteilnehmer des Funknetzes ist dann nur über das Funkmodul 5 bzw. über die beiden Schnittstellen 10, 40 möglich, so daß bei Unterbrechung des drahtlosen Datenaustauschs zwischen diesen beiden Schnittstellen 10, 40 auch eine Unterbrechung der Verbindung zwischen dem Funkgerät 1 und dem Verbindungsteilnehmer erfolgt. Nimmt man diesen Nachteil in Kauf, so läßt sich ein in seinem Aufbau und seiner Funktionalität erheblich vereinfachtes Funkgerät 1 einsetzen, das besonders kostengünstig material- und kostensparend ausgeführt werden kann, so daß auch nur geringe räumliche Abmessungen des Funkgerätes 1 erforderlich sind.

Das Funkmodul 5 unterstützt jedenfalls die volle Funktionalität eines Mobiltelefons und weist die Möglichkeit auf, zahlreiche andere Endgeräte anzuschließen und/oder zu integrieren. So kann an das Funkmodul 5 zusätzlich ein Faxgerät und/oder ein Personal-Computer über entsprechende Schnittstellen drahtgebunden oder auch drahtlos angeschlossen werden.

Das erfindungsgemäße Telekommunikationsendgerät kann auch als Faxgerät, als Personalcomputer oder dergleichen ausgebildet sein und für die Durchführung des erfindungsgemäßen Verfahrens prinzipiell den gleichen Aufbau aufweisen wie das Funkgerät 1 gemäß Figur 1. Ein drahtgebundener Anschluß solcher Endgeräte an das Funkmodul ist somit nicht erforderlich. Bei Anschluß oder Integration des Funkmoduls 5 an bzw. in ein Autoradio können vom Funkmodul 5 auch Funktionen und Vorrichtungen des Autoradios mitbenutzt werden, wie beispielsweise Lautsprecher, Klangsteller oder dergleichen. Das Funkmodul 5 kann mit dem Autoradio auch in einer Weise zusammenwirken, die es erlaubt, Rundfunk- und Telekommunikationsanwendungen parallel zu betreiben. So kann beispielsweise eine automatische Stummschaltung des Autoradios erfolgen, wenn gerade eine Telekommunikationsverbindung besteht. Mittels eines Freisprechmikrofons am Autoradio und den Lautsprechern des Autoradios kann für die Telekommunikationsanwendungen eine Freisprech- und Freihörfunktion realisiert werden.

Über die erste Schnittstelle 40 können bei entsprechender Organisation des drahtlosen Datenaustausches zum Beispiel mittels eines Zeitschlitzverfahrens gleichzeitig auch mehrere erfindungsgemäße Endgeräte in der beschriebenen Weise betrieben werden, wobei es sich um gleichartige und/oder verschiedene Endgerätetypen handeln kann, die jedoch prinzipiell einen Aufbau gemäß dem Funkgerät 1 in Figur 1 aufweisen. So können beispielsweise gleichzeitig mehrere Mobiltelefone über die erste Schnittstelle 40 betrieben werden. Es können jedoch auch gleichzeitig Mobiltelefone, Faxgeräte, Personal Computer und/oder dergleichen über die erste Schnittstelle 40 betrieben werden.

Weiterhin kann auch ein erfindungsgemäßes Telekommunikationsendgerät mit beliebig vielen erfindungsgemäßen Funkmodulen betrieben werden.

Bei Anordnung der Funkmodule in verschiedenen Kraftfahrzeugen ist der Benutzer somit immer über eine einzige Rufnummer, nämlich die Rufnummer seines Telekommunikationsendgerätes erreichbar.

Da das Funkmodul unabhängig vom Endgerätetyp und von der Rufnummer des Telekommunikationsendgerätes ist, kann es von wechselnden Benutzern mit verschiedenen Endgeräten und Endgerätetypen betrieben werden.

Bei Ausbildung der ersten Schnittstelle 40 und der zweiten Schnittstelle 10 als Funkschnittstelle werden zwischen den beiden Schnittstellen 10, 40 nur Funksignale mit begrenzter Reichweite übertragen, das heißt, es handelt sich dabei um eine lokale Funkübertragung mit im Vergleich zum GSM-Funknetz geringer Reichweite. Hohe Abstrahlleistungen sind dabei nicht erforderlich, so daß keine Strahlenbelastung beim Benutzer auftritt. Für diesen drahtlosen Funkdatenaustausch zwischen den beiden Schnittstellen 10, 40 kann dabei beispielsweise der DECT-Standard gewählt werden.

## Patentansprüche

1. Verfahren zum Betrieb eines Telekommunikationsendgeräts (1), wobei bei einem Verbindungswunsch des Telekommunikationsendgeräts (1) geprüft wird, ob eine drahtlose Verbindung zu einem Funkmodul (5) aufgebaut werden kann und wobei für den Fall, dass eine drähtlose Verbindung zum Funkmodul (5) aufgebaut werden kann, zwischen dem Telekommunikationsendgerät (1) und dem Funkmodul (5) Signale drahtlos mit einer ersten Sendeleistung übertragen werden und vom Funkmodul Signale mit einer vorgegebenen Sendeleistung in ein Funknetz abgestrahlt werden, die von den empfangenen Signalen des Telekommunikationsendgeräts (1) abgeleitet sind, wobei während einer Unterbrechung einer drahtlosen Übertragung zwischen dem Telekommunikationsendgerät (1) und dem Funkmodul (5) die Signale mit einer weiteren, zweiten vorgegebenen Leistung vom Telekommunikationsendgerät (1) ins Funknetz abgestrahlt werden, wobei die zweite vorgegebenen Leistung großer ist als die erste Sendeleistung.

2. Verfahren nach Anspruch 1, **dadurch gekennzeichnet, daß** für den Fall, daß keine drahtlose Verbindung zum Funkmodul (5) aufgebaut werden kann, Signale vom Telekommunikationsendgerät (1) mit der weiteren vorgegebenen Leistung abgestrahlt werden.

3. Verfahren nach Anspruch 1 oder 2, **dadurch gekennzeichnet, daß** zwischen dem Telekommunikationsendgerät (1) und dem Funkmodul (5) optische Signale, übertragen werden.

4. Verfahren nach Anspruch 1, 2 oder 3, **dadurch gekennzeichnet, daß** zwischen dem Telekommunikationsendgerät (1) und dem Funkmodul (5) Funksignale mit begrenzter Reichweite.

5. Telekommunikationsendgerät (1), wobei eine Prüfvorrichtung (15) vorgesehen ist, wobei die Prüfvorrichtung (15) bei einem Verbindungswunsch prüft, ob ein drahtloser Datenaustausch mit einem Funkmodul (5) möglich ist, wobei für den Fall eines möglichen drahtlosen Datenaustausches die Prüfvorrichtung (15) einen Umschalter (20) so ansteuert, dass er die Schnittstelle (10) mit einer Sendeeinheit (25) verbindet, so dass Signale vom Telekommunikationsendgerät (1) über die Schnittstelle (10) an das Funkmodul (5) mit einer ersten Sendeleistung absenkbar sind, wobei vom Funkmodul (5) Signale mit einer vorgegebenen Leistung in ein Funknetz abgestrahlt werden, wobei während einer Unterbrechung einer drahtlosen Übertragung zwischen dem Telekommunikationsendgerät (1) und dem Funkmodul (5) vom Telekommunikationsendgerät (1) die Signale mit einer weiteren zweiten vorgegebenen Sendeleistung ins Funknetz abgestrahlt werden, wobei die zweite Sendeleistung größer ist als die erste Sendeleistung.

6. Telekommunikationsendgerät (1) nach Anspruch 5, **dadurch gekennzeichnet, daß** für den Fall, daß kein drahtloser Datenaustausch mit dem Funkmodul (5) möglich ist, die Prüfvorrichtung (15) den Umschalter (20) so ansteuert, daß er die Sendeeinheit (25) mit einer Funkeinheit (30) zur Abstrahlung von Signalen mit der vorgegebenen Leistung verbindet.

7. Telekommunikationsendgerät (1) nach Anspruch 5 oder 6, **dadurch gekennnzeichnet, daß** die Schnittstelle (10) als optische Schnittstelle, ausgebildet ist.

8. Telekommunikationsendgerät (1) nach Anspruch 5 oder 6, **dadurch gekennnzeichnet, daß** die Schnittstelle (10) als Funkschnittstelle für Funkübertragungen mit begrenzter Reichweite, ausgebildet ist.

## Claims

1. Method for operating a telecommunication terminal (1), wherein in the case of a call request by the telecommunication terminal (1), a check is made whether a wireless connection can be set up to a radio module (5) and wherein, in the case where a wireless connection can be set up to the radio module (5), signals are wirelessly transmitted with a first transmit power between the telecommunication terminal (1) and the radio module (5) and signals which are derived from the received signals of the telecommunication terminal (1) are radiated with a predetermined transmit power into a radio network by the radio module, wherein, during an interruption of a wireless transmission between the telecommunication terminal (1) and the radio module (5), the signals are radiated with a further second predetermined power into the radio network by the telecommunication terminal (1), the second predetermined power being greater than the first transmit power.

2. Method according to Claim 1, **characterized in that** in the case where no wireless connection can be set up to the radio module (5), signals are radiated with the further predetermined power by the telecommunication terminal (1).

3. Method according to Claim 1 or 2, **characterized in that** optical signals are transmitted between the telecommunication terminal (1) and the radio module (5).

4. Method according to Claim 1, 2 or 3, **characterized in that** radio signals with limited range are transmitted between the telecommunication terminal (1) and the radio module (5).

5. Telecommunication terminal (1), wherein a testing device (15) is provided, wherein the test device (15), in the case of a call request, checks whether a wireless data exchange with a radio module (5) is possible, wherein, in the case of a possible wireless data exchange, the test device (15) drives a change-over switch (20) in such a manner that it connects the interface (10) to a transmitting unit (25) so that signals can be sent with a first transmit power from the telecommunication terminal (1) to the radio module (5) via the interface (10), wherein signals are radiated with a predetermined power into a radio network by the radio module (5), wherein, during an interruption of a wireless transmission between the telecommunication terminal (1) and the radio module (5), the signals are radiated with a further second predetermined transmit power into the radio network by the telecommunication terminal (1), the second transmit power being greater than the first transmit power.

6. Telecommunication terminal (1) according to Claim 5, **characterized in that** in the case where no wireless data exchange with the radio module (5) is possible, the test device (15) drives the change-over switch (20) in such a manner that it connects the transmitting unit (25) to a radio unit (30) for radiating signals with the predetermined power.

7. Telecommunication terminal (1) according to Claim 5 or 6, **characterized in that** the interface (10) is constructed as optical interface.

8. Telecommunication terminal (1) according to Claim 5 or 6, **characterized in that** the interface (10) is constructed as radio interface for radio transmissions with limited range.

## Revendications

1. Procédé de commande d'un terminal de télécommunication (1) selon lequel en cas de demande de liaison vers le terminal de télécommunication (1) on vérifie si l'on peut établir une liaison sans fil vers un module radio (5) et dans l'affirmative on transmet entre le terminal de télécommunication (1) et le module radio (5), les signaux par une liaison sans fil avec une première puissance d'émission et le module radio émet des signaux dans le réseau radio avec une puissance d'émission prédéfinie, ces signaux étant déduits des signaux reçus par le terminal de télécommunication (1), et
pendant une interruption d'une transmission sans fil entre le terminal de télécommunication (1) et le module radio (5), les signaux sont rayonnés avec une autre seconde puissance prédéfinie vers le réseau radio par le terminal de télécommunication (1), la seconde puissance prédéfinie étant supérieure à la première puissance d'émission.

2. Procédé selon la revendication 1,
**caractérisé en ce qu'**
au cas où l'on ne peut établir de liaison sans fil vers le module radio (5), les signaux du terminal de télécommunication (1) sont émis avec une seconde puissance prédéfinie.

3. Procédé selon la revendication 1 ou 2,
**caractérisé en ce qu'**
on transmet des signaux optiques entre le terminal de télécommunication (1) et le module radio (5).

4. Procédé selon l'une des revendications 1, 2, 3,
**caractérisé en ce qu'**
entre le terminal de télécommunication (1) et le module radio (5) on échange des signaux radio de portée limitée.

5. Terminal de télécommunication (1) comportant un dispositif de contrôle (15) qui en cas de demande de liaison détermine si un échange de données par radio est possible avec un module radio (5) et dans l'affirmative, le dispositif de contrôle (15) commande un commutateur (20) pour qu'il relie l'interface (10) à une unité d'émission (25) pour que les signaux du terminal de télécommunication (1) puissent être transmis par l'intermédiaire de l'interface (10) au module radio (5) avec une première puissance d'émission, le module radio (5) émettant des signaux d'une puissance prédéfinie dans un réseau radio et pendant l'interruption d'une transmission radio entre le terminal de télécommunication (1) et le module radio (5), le terminal de télécommunication (1) émet les signaux avec une seconde puissance d'émission, prédéfinie dans le réseau radio, cette seconde puissance d'émission étant supérieure à la première puissance d'émission.

6. Terminal de télécommunication (1) selon la revendication 5,
**caractérisé en ce qu'**
au cas où il n'est pas possible d'échanger les données par radio à l'aide du module radio (5), le dispositif de contrôle (15) commande le commutateur (20) pour qu'il relie l'unité d'émission (25) à une unité radio (30) pour rayonner les signaux à la puissance prédéfinie.

7. Terminal de télécommunication (1) selon les revendications 5 ou 6,
**caractérisé en ce que**
l'interface (10) est une interface optique.

8. Terminal de télécommunication (1) selon les revendications 5 ou 6,
**caractérisé en ce que**
l'interface (10) est une interface radio pour les transmissions radios de portée limitée.
